# EUROPÄISCHE PATENTSCHRIFT

(11) **EP 1 729 546 B1**
(45) Veröffentlichungstag und Bekanntmachung des Hinweises auf die Patenterteilung: **22.01.2014**
(21) Anmeldenummer: 06011122.6
(22) Anmeldetag: 30.05.2006
(51) Int. Cl.: H05B 41/28, H05B 41/282, H02M 1/34, H02M 3/156, H02M 3/158, H02M 1/00

(54) **Elektronisches Vorschaltgerät für mindestens eine Lampe**
Electronic ballast for at least one lamp
Ballast électronique pour au moins une lampe

(30) Priorität: 03.06.2005 DE 102005025626
(43) Veröffentlichungstag der Anmeldung: 06.12.2006
(73) Patentinhaber: OSRAM GmbH, 80807 München (DE)
(72) Erfinder: Heckmann, Markus, 511495 Guangzhou (CN)

(56) Entgegenhaltungen:
- DE-A1- 19 715 259
- US-A- 5 982 642
- US-A1- 2004 051 479

## Beschreibung

### Technisches Gebiet

Die vorliegende Erfindung betrifft ein elektronisches Vorschaltgerät für mindestens eine Lampe mit mindestens einem ersten Schalter, wobei der erste Schalter mindestens einen Arbeitsanschluss, einen Bezugsanschluss und einen Steuereingangsanschluss aufweist, und mit mindestens einer Hilfseinheit, wobei die mindestens eine Hilfseinheit einen Versorgungsanschluss aufweist.

### Stand der Technik

Derartige elektronische Vorschaltgeräte sind im Stand der Technik einschlägig bekannt, wobei die Hilfseinheit unterschiedliche Funktionen wahrnehmen kann, beispielsweise die Ansteuerung des mindestens einen ersten Schalters übernehmen kann, eine "End of Life"-Überwachung, einen Überwachung auf Überspannung, auf Übertemperatur oder unterschiedlichste Steuerungsaufgaben, etc. Aus den Schriften DE 19715259A1 und US 5982642 sind Versorgungsschaltungen für Hilfseinheiten bekannt. Diese Versorgungsschaltungen umfassen Übertrager, deren Primärwicklungen vom Laststrom durchflossen werden. Über Gleichrichter, die an Sekundärwicklungen angeschlossen sind wird eine Spannungsversorgung von Hilfseinheiten bereitgestellt.

Weiterhin sind aus den Schriften EP 859 453 und US 5 282 126 Versorgungsschaltungen für Kontroll-Einheiten bekannt, wobei diese Versorgungsschaltungen über einen Kondensator gespeist werden.

Bei einer Vielzahl von aus dem Stand der Technik bekannten elektronischen Vorschaltgeräten ist neben dem ersten Schalter ein zweiter Schalter vorhanden, der zusammen mit dem ersten Schalter in einer Halbbrückenanordnung angeordnet ist. Dabei ist der Halbbrückenmittelpunkt mit dem Lampenlastkreis verbunden. Mit dem Mittelpunkt der Halbbrückenanordnung ist überdies ein so genannter Snubber-Kondensator (Trapez-Kondensator) verbunden, um ein Zero-Voltage-Switching der beiden Schalter zu ermöglichen. Es ist nun bekannt, die im Snubber-Kondensator gespeicherte Energie zur Versorgung für die Hilfseinheit zu verwenden. Diese Praxis funktioniert jedoch nur, wenn der Lampenlastkreis ausreichend Blindenergie zur Verfügung hat. Insbesondere bei Vorschaltgeräten kleinerer Leistung und bei einflammigen elektronischen Vorschaltgeräten kann der Snubber-Kondensator oft nicht ausreichend groß bemessen werden, da damit eine zu starke kapazitive Belastung der Halbbrückenanordnung einhergehen würde. In unerwünschter Weise würden sich dadurch hohe Verluste in der Lampendrossel sowie in den Schaltern einstellen, die deshalb größer dimensioniert werden müssten.

Um dennoch eine ausreichende Versorgung von Hilfseinheiten sicherzustellen, ist es im Stand der Technik bekannt, Energie aus dem im Lampenlastkreis angeordneten Resonanz-Kondensator, der zur Zündung der Lampe benötigt wird, zur Versorgung der Hilfseinheiten zu verwenden. Diese Lösung ist jedoch bei Multiwattgeräten sehr unwirtschaftlich und führt zudem oft zu thermischen Problemen. Außerdem treten während der Lampenzündung sehr hohe Belastungen in den Bauteilen auf, die zur Stabilisierung der Versorgungsspannung der jeweiligen Hilfseinheit dienen.

### Darstellung der Erfindung

Die Aufgabe der vorliegenden Erfindung besteht deshalb darin, ein eingangs genanntes elektronisches Vorschaltgerät derart weiterzubilden, dass eine zuverlässige Stromversorgung für mindestens eine Hilfseinheit ermöglicht wird, die gleichzeitig den restlichen Schaltungsaufbau möglichst wenig belasten soll.

Diese Aufgabe wird gelöst durch ein elektronisches Vorschaltgerät mit den Merkmalen von Patentanspruch 1.

Die vorliegende Erfindung basiert zunächst auf der Erkenntnis, dass bei der Vorgehensweise nach dem Stand der Technik mit einem Snubber-Kondensator an Energie nur die Versorgungsspannung der Hilfseinheit, beispielsweise 16 Volt, multipliziert mit der Ladung auf dem Snubber-Kondensator genutzt wird. Von der Halbbrückenanordnung werden jedoch an Energie geliefert einhalb mal die Halbbrückenspannung im Quadrat multipliziert mit der Ladung auf dem Snubber-Kondensator. Da die Spannung am Halbbrückenmittelpunkt in der Größenordnung von über 200 Volt liegt, ergibt sich eine schlechte Ausnutzung der vorhandenen Energie. Insbesondere ist das Verhältnis aus gewonnener Energie dividiert durch den Betrag der kapazitiven Belastung schlecht. Die Erfindung basiert insbesondere auf der Idee, den Lampenlastkreis nicht weiter kapazitiv zu belasten, sondern zur Auskopplung von Energie zur Versorgung der mindestens einen Hilfseinheit mindestens eine Induktivität zu verwenden. Dabei wird Energie in der Induktivität gespeichert und bei der Entmagnetisierung der Induktivität langsam wieder abgegeben. Da das Integral der Energie für die gelieferte Strommenge maßgeblich ist, kann hier - anders als beim Kondensator, bei dem die Bereitstellung von Energie, d. h. die Entladung des Kondensators, die schnell ablaufender Vorgang ist - die induktive Belastung über einen längeren Zeitraum ausgedehnt werden und wirkt sich dadurch weit weniger negativ aus.

Im Vorhergehenden wurde zur einfacheren Verständlichkeit die Problematik und die grundsätzliche Lösung am Beispiel eines elektronischen Vorschaltgeräts mit einem Lampenlastkreis dargestellt, wobei der Arbeitsanschluss des mindestens einen Schalters an den Lampenlastkreis gekoppelt ist. Es gibt jedoch auch elektronische Vorschaltgeräte, bei denen lediglich ein Schalter einen Lampenlastkreis betreibt. Diese sind unter der Bezeichnung Klasse E-Converter bekannt. Wie für den Fachmann offensichtlich, lässt sich die vorliegende Erfmdung auch auf diesem Gebiet und überdies auf anderen Gebieten einsetzen, beispielsweise wenn der erste Schalter Bestandteil einer aktiven Schaltungseinheit ist, insbesondere einer aktiven Schaltungseinheit zur Leistungsfaktorkorrektur.

In dem erwähnten Beispiel mit zwei Schaltern umfasst der zweite Schalter insbesondere auch mindestens einen Arbeitsanschluss, einen Bezugsanschluss und einen Steuereingangsanschluss, wobei der Arbeitsanschluss des zweiten Schalters mit dem Arbeitsanschluss des ersten Schalters unter Ausbildung einer Brückenschaltung gekoppelt ist, wobei durch die Kopplung des Arbeitsanschlusses des ersten Schalters und des Arbeitsanschlusses des zweiten Schalters der Mittelpunkt der Brückenschaltung definiert ist.

Erfindungsgemäß umfasst die Versorgungseinheit einen LC-Schwingkreis, wobei die Induktivität Teil dieses LC-Schwingkreises ist. Insbesondere bei Ausbildung als Serienschwingkreis kann der Kondensator klein bemessen werden, da der Umschwingvorgang, d. h. der Übergang von einem Zustand, in dem der erste Schalter geschlossen und der zweite Schalter geöffnet ist, auf einen Zustand, in dem der erste Schalter geöffnet ist und der zweite Schalter geschlossen ist, nicht nur die Umschwingladung für diesen Kondensator liefert, sondern auch Energie in die Induktivität Energie einspeichert, welche auch nach dem Umschwingvorgang in die Hilfseinheit weitergespeist werden kann. Generell kann eine derartige Versorgungseinheit die gesamte Stromversorgung für die Hilfseinheit sicherstellen, d. h. ohne zusätzliche Verwendung eines Snubber-Kondensators.

Besonders bevorzugt umfasst die Versorgungseinheit die Serienschaltung aus einem ersten Kondensator, der Induktivität und einer ersten Diode, wobei der Verbindungspunkt zwischen der Induktivität und dem ersten Kondensator über eine Spannungsbegrenzungsvorrichtung insbesondere eine zweite Diode, eine Zenerdiode und/oder einen Varistor, an ein Bezugspotential gekoppelt ist. Hierbei stellt die erste Diode sicher, dass ein Stromfluss nur in Einspeiserichtung ermöglicht wird. Die Spannungsbegrenzungsvorrichtung limitiert die Aufladung der Drossel. Dabei ist die Spannungsbegrenzungsvorrichtung bevorzugt ausgelegt, den Spannungshub am Verbindungspunkt zwischen dem ersten Kondensator und der Induktivität auf einen vorgebbaren Grenzwert zu begrenzen.

Bei einer bevorzugten Weiterbildung der soeben erwähnten Ausführungsform ist der Verbindungspunkt zwischen der Induktivität und der ersten Diode über eine dritte Diode an das Bezugspotential gekoppelt. Diese dritte Diode dient der Klemmung einer gegebenenfalls vorhandenen parasitären Schwingung.

Bei einer weiterhin bevorzugten Ausführungsform ist der Versorgungsanschluss der Hilfseinheit weiterhin über die Serienschaltung eines zweiten Kondensators und einer vierten Diode an den Arbeitsanschluss des ersten Schalters gekoppelt, wobei der Verbindungspunkt zwischen dem zweiten Kondensator und der vierten Diode über eine fünfte Diode an ein Bezugspotential gekoppelt ist. Diese Maßnahme eröffnet die Verwendung eines zusätzlichen Snubber-Kondensators zur Versorgung der Hilfseinheit.

Weitere bevorzugte Ausführungsformen ergeben sich aus den Unteransprüchen.

### Kurze Beschreibung der Zeichnungen

Im Nachfolgenden werden zwei Ausführungsbeispiele unter Bezugnahme auf die beigefügten Zeichnungen näher beschrieben. Es zeigen:
- Figur 1: in schematischer Darstellung eine erste Ausführungsform eines erfindungsgemä-ßen elektronischen Vorschaltgeräts, wobei nur die im Hinblick auf die Erfindung relevanten Bauelemente dargestellt sind; und
- Figur 2: in schematischer Darstellung ein weiteres elektronisches Vorschaltgerät.

### Bevorzugte Ausführung der Erfindung

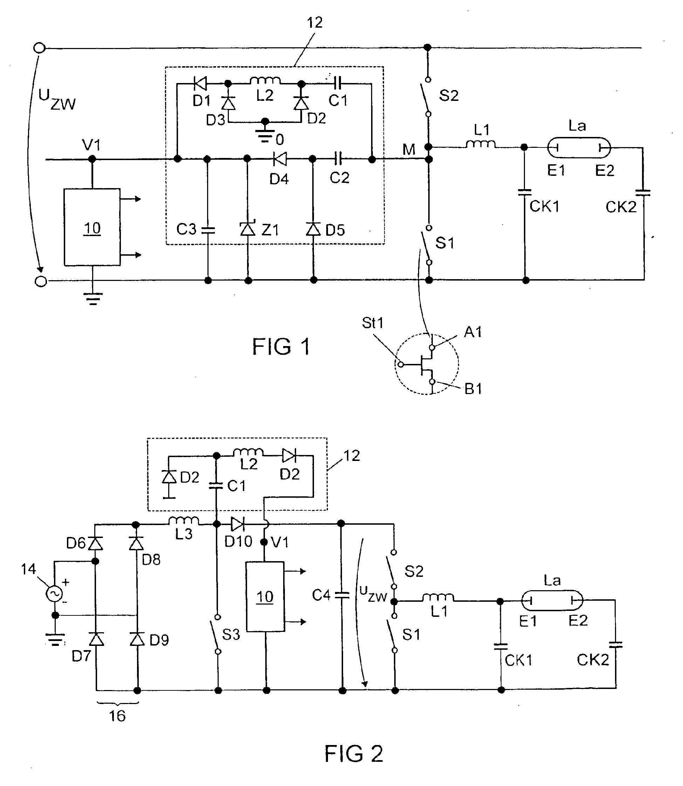

Figur 1 zeigt in schematischer Darstellung den im Hinblick auf die vorliegende Erfindung relevanten Ausschnitt aus einem erfindungsgemäßen elektronischen Vorschaltgerät. Dabei ist eine Lampe La über eine Induktivität L1 mit dem Mittelpunkt M einer Halbbrückenschaltung verbunden, die die Schalter S1 und S2 umfasst. Jeder Schalter S1, S2 weist einen Arbeitsanschluss, einen Bezugsanschluss und einen Steuereingangsanschluss auf, wobei in Figur 1 in der dargestellten Vergrößerung nur die Anschlüsse für den Schaler S1 dargestellt sind, nämlich der Arbeitsanschluss A1, der Bezugsanschluss B1 und der Steuereingangsanschluss St1. Beim Schalter S2 sind gegenüber dem Schalter S1 Arbeits- und Bezugsanschluss vertauscht, d. h. der Bezugsanschluss liegt oben, der Arbeitsanschluss unten, d. h. beide Arbeitsanschlüsse sind mit dem Halbbrückenpunkt M verbunden. Beide Elektroden E1, E2 der Lampe La sind über Koppelkondensatoren C_{K1} und C_{K2} mit dem Massepotential als Bezugspotential verbunden. Eine Hilfseinheit 10, die, wie mit den beiden Pfeilen zum Ausdruck gebracht wird, die Ansteuerung der beiden Schalter S1 und S2 übernimmt, weist einen Versorgungsanschluss V1 auf. Eine Versorgungseinheit 12 ist zwischen den Halbbrückenmittelpunkt M und den Versorgungsanschluss V1 der Hilfseinheit 10 geschaltet. Sie umfasst die Serienschaltung eines Kondensators C1, einer Induktivität L2 und einer ersten Diode D1. Hierbei bilden der Kondensator C1 und die Induktivität L2 einen LC-Schwingkreis. Der Verbindungspunkt zwischen der Induktivität L2 und dem Kondensator C1 ist über eine Spannungsbegrenzungsvorrichtung, vorliegend eine Diode D2, an ein Bezugspotential, vorliegend ein Massepotential, gekoppelt. Die Diode D2 dient der Begrenzung des Spannungshubs am Verbindungspunkt zwischen dem Kondensator C1 und der Induktivität L2 auf einen vorgebbaren Grenzwert. Der Verbindungspunkt zwischen der Induktivität L2 und der Diode D1 ist über eine Diode D3 ebenfalls mit dem Bezugspotential gekoppelt, wodurch parasitäre Schwingungen im Versorgungssignal beseitigt werden können.

Neben dem Versorgungszweig, der die Bauelemente C1, D2, L2, D3 und D1 umfasst, kann ein weiterer Versorgungszweig zwischen dem Halbbrückenmittelpunkt M und dem Versorgungsanschluss V1 der Hilfseinheit 10 vorgesehen werden: Hierzu ist ein Kondensator C2, an dieser Stelle auch als sogenannter Snubber-Kondensator bezeichnet, über eine Diode D4 mit dem Versorgungsanschluss V1 verbunden. Eine Diode D5 ermöglicht die erneute Umladung des Kondensators C2 und eine Zenerdiode Z1 dient der Spannungsbegrenzung auf einen vorgegebenen Wert. Überdies kann ein Kondensator C3 vorgesehen werden, um die Versorgung der Hilfseinheit 10 mit einer möglichst konstanten Versorgungsspannung sicherzustellen.

Figur 2 zeigt ein weiteres elektronisches Vorschaltgerät. Hierbei sind Bauelemente, die denen von Figur 1 entsprechen, mit entsprechenden Bezugszeichen gekennzeichnet und werden nicht nochmals beschrieben. Diese Schaltung weist ein aktives Netzeingangsteil auf und ist eingangsseitig an eine Wechselspannungsquelle 14 angeschlossen. Das Wechselspannungssignal wird in einem Gleichrichter 16, der die Dioden D6 bis D9 umfasst, gleichgerichtet. Die Serienschaltung durchläuft eine Induktivität L3 und eine Diode D10 und wird schließlich an einen Kondensator C4 als Zwischenkreisspannung U_{zw} der Halbbrückenanordnung mit den Schaltern S1 und S2, siehe dazu auch Figur 1, bereitgestellt. Zur Versorgung der Hilfseinheit 10 ist die Versorgungseinheit 12, die vorliegend den Kondensator C1, die Dioden D1 und D2 und die Induktivität L2 umfasst, mit dem Arbeitsanschluss eines Schalters S3 verbunden. In der Schaltungsanordnung von Figur 2 bilden der Schalter S3, die Diode D10 und die Induktivität L3 einen Hochsetzer (Boost Converter). Dabei wird Energie in die Induktivität L3 eingespeichert, solange der Schalter S3 geschlossen ist. Nach dem Öffnen des Schalters S3 wird diese Energie induktiv in den Ausgangskreis gespeist.

## Patentansprüche

1. Elektronisches Vorschaltgerät für mindestens eine Lampe (La) mit
- einem ersten Schalter (S1), wobei der erste Schalter (S1) mindestens einen Arbeitsanschluss (A1), einen Bezugsanschluss (B1) und einen Steuereingangsanschluss (St1) aufweist;
- mindestens einer Hilfseinheit (10), wobei die Hilfseinheit (10) einen Versorgungsanschluss (V1) aufweist; und
- einer Versorgungseinheit (12), wobei die Versorgungseinheit (12) zwischen dem Versorgungsanschluss (V1) der Hilfseinheit (10) und dem Arbeitsanschluss (A1) des ersten Schalters (S1) gekoppelt ist,
wobei die Versorgungseinheit (12) einen ersten Versorgungszweig und einen zweiten Versorgungszweig aufweist,
wobei der erste Versorgungszweig eine erste zwischen dem Versorgungsanschluss (V1) der Hilfseinheit (10) und dem Arbeitsanschlusses (A1) des ersten Schalters (S1) gekoppelten Serienschaltung, bestehend aus einem ersten Kondensator (C1), einer Induktivi-tät (L2) und einer ersten Diode (D1), umfasst, wobei der erste Kondensator (C1) und die Induktivität (L2) einen LC-Schwingkreis bilden und wobei die Induktivität (L2) ausgelegt ist, um Energie zur Versorgung der Hilfseinheit (10) zu speichern, wobei der zweite Versorgungszweig eine zweite zwischen dem Versorgungsanschluss (V1) der Hilfseinheit (10) und dem Arbeitsanschlusses (A1) des ersten Schalters (S1) gekoppelten Serienschaltung, bestehend aus einem zweiten Kondensator (C2) und einer vierten Diode (D4), umfasst, wobei der Verbindungspunkt zwischen dem zweiten Kondensator (C2) und der vierten Diode (D4) über eine fünfte Diode (D5) an ein Bezugspotential gekoppelt ist,
wobei das elektronische Vorschaltgerät **dadurch gekennzeichnet ist,**
**dass** der Verbindungspunkt zwischen der Induktivität (L2) und dem ersten Kondensator (C1) über eine Spannungsbegrenzungsvorrichtung, insbesondere eine zweite Diode (D2), eine Zenerdiode und/oder einen Varistor, an ein Bezugspotential gekoppelt ist, wobei die Spannungsbegrenzungsvorrichtung ausgelegt ist, den Spannungshub am Verbindungspunkt zwischen dem ersten Kondensator (C1) und der Induktivität (L2) auf einen vorgebbaren Grenzwert zu begrenzen.

2. Elektronisches Vorschaltgerät nach Anspruch 1,
**dadurch gekennzeichnet,**
**dass** an den Arbeitsanschluss (A1) ein Lampenlastkreis gekoppelt ist.

3. Elektronisches Vorschaltgerät nach Anspruch 1,
**dadurch gekennzeichnet,**
**dass** der erste Schalter (S1) Bestandteil einer aktiven Schaltungseinheit, insbesondere einer aktiven Schaltungseinheit zur Leistungsfaktorkorrektur, ist.

4. Elektronisches Vorschaltgerät nach einem der vorhergehenden Ansprüche,
**dadurch gekennzeichnet,**
**dass** es weiterhin mindestens einen zweiten Schalter (S2) umfasst, wobei der zweite Schalter (S2) mindestens einen Arbeitsanschluss (A2), einen Bezugsanschluss (B2) und einen Steuereingangsanschluss (St2) aufweist, wobei der Arbeitsanschluss (A2) des zweiten Schalters (S2) mit dem Arbeitsanschluss (A1) des ersten Schalters (S1) unter Ausbildung einer Brückenschaltung gekoppelt ist, wobei durch die Kopplung des Arbeitsanschlusses (A1) des ersten Schalters (S1) und des Arbeitsanschlusses (A2) des zweiten Schalters (S2) ein Mittelpunkt der Brückenschaltung defmiert ist.

5. Elektronisches Vorschaltgerät nach Anspruch 1,
**dadurch gekennzeichnet,**
**dass** der Verbindungspunkt zwischen der Induktivität (L2) und der ersten Diode (D1) über eine dritte Diode (D3) an das Bezugspotential gekoppelt ist.

## Claims

1. Electronic ballast for at least one lamp (La) having
- a first switch (S1), the first switch (S1) having at least one working terminal (A1), a reference terminal (B1) and a control input terminal (St1);
- at least one auxiliary unit (10), the auxiliary unit (10) having a supply terminal (V1); and
- a supply unit (12), wherein the supply unit (12) is coupled between the supply terminal (V1) of the auxiliary unit (10) and the working terminal (A1) of the first switch (S1),
wherein the supply unit (12) has a first supply branch and a second supply branch,
wherein the first supply branch comprises a first series circuit comprising a first capacitor (C1), an inductance (L2) and a first diode (D1), which series circuit is coupled between the supply terminal (V1) of the auxiliary unit (10) and the working terminal (A1) of the first switch (S1), wherein the first capacitor (C1) and the inductance (L2) form an LC resonance circuit and wherein the inductance (L2) is designed to store energy for supplying power to the auxiliary unit (10),
wherein the second supply branch comprises a second series circuit comprising a second capacitor (C2) and a fourth diode (D4), which series circuit is coupled between the supply terminal (V1) of the auxiliary unit (10) and the working terminal (A1) of the first switch (S1), wherein the connection point between the second capacitor (C2) and the fourth diode (D4) is coupled to a reference potential via a fifth diode (D5),
wherein the electronic ballast is **characterized in that** the connection point between the inductance (L2) and the first capacitor (C1) is coupled to a reference potential via a voltage limitation apparatus, in particular a second diode (D2), a zener diode and/or a varistor, wherein the voltage limitation apparatus is designed to limit the voltage step at the connection point between the first capacitor (C1) and the inductance (L2) to a predeterminable limit value.

2. Electronic ballast according to Claim 1,
**characterized**
**in that** a lamp load circuit is coupled to the working terminal (A1).

3. Electronic ballast according to Claim 1,
**characterized**
**in that** the first switch (S1) is part of an active circuit unit, in particular an active circuit unit for power factor correction.

4. Electronic ballast according to one of the preceding claims,
**characterized**
**in that** it also comprises at least one second switch (S2), the second switch (S2) having at least one working terminal (A2), a reference terminal (B2) and a control input terminal (St2), the working terminal (A2) of the second switch (S2) being coupled to the working terminal (A1) of the first switch (S1) so as to form a bridge circuit, a center point of the bridge circuit being defined by the coupling between the working terminal (A1) of the first switch (S1) and the working terminal (A2) of the second switch (S2).

5. Electronic ballast according to Claim 1,
**characterized**
**in that** the connection point between the inductance (L2) and the first diode (D1) is coupled to the reference potential via a third diode (D3).

## Revendications

1. Ballast électronique pour au moins une lampe (La) comprenant
- un premier commutateur (S1), ledit premier commutateur (S1) ayant au moins une borne de travail (A1), une borne de référence (B1) et une borne d'entrée de commande (St1) ;
- au moins une unité auxiliaire (10), ladite unité auxiliaire (10) ayant une borne d'alimentation (V1) ; et
- une unité d'alimentation (12), ladite unité d'alimentation (12) étant couplée entre la borne d'alimentation (V1) de l'unité auxiliaire (10) et la borne de travail (A1) du premier commutateur (S1),
ladite unité d'alimentation (12) possédant une première branche d'alimentation et une deuxième branche d'alimentation,
la première branche d'alimentation comprenant un premier montage en série couplé entre la borne d'alimentation (V1) de l'unité auxiliaire (10) et la borne de travail (A1) du premier commutateur (S1) et constitué par un premier condensateur (C1), une inductance (L2) et une première diode (D1), le premier condensateur (C1) et l'inductance (L2) formant un circuit oscillant LC et l'inductance (L2) étant adapté pour accumuler l'énergie pour l'alimentation de l'unité auxiliaire (10),
la deuxième branche d'alimentation comprenant un deuxième montage en série couplé entre la borne d'alimentation (V1) de l'unité auxiliaire (10) et la borne de travail (A1) du premier commutateur (S1) et constitué par un deuxième condensateur (C2) et une quatrième diode (D4), le point de connexion entre le deuxième condensateur (C2) et la quatrième diode (D4) étant couple à un potentiel de référence via une cinquième diode (D5),
le ballast électronique étant **caractérisé en ce que** le point de connexion entre l'inductance (L2) et le premier condensateur (C1) est couplé à un potentiel de référence via un dispositif limiteur de tension, en particulier une deuxième diode (D2), une diode Zener et/ou un varistor, le dispositif limiteur de tension étant adapté pour limiter l'excursion de tension au point de connexion entre le premier condensateur (C1) et l'inductance (L2) à une valeur limite pouvant être prédéterminée.

2. Ballast électronique selon la revendication 1,
**caractérisé en ce qu'**un circuit de charge de lampe est couplé à la borne de travail (A1).

3. Ballast électronique selon la revendication 1,
**caractérisé en ce que** le premier commutateur (S1) fait partie d'une unité de circuit actif, en particulier d'une unité de circuit actif pour la correction du facteur de puissance.

4. Ballast électronique selon l'une des revendications précédentes,
**caractérisé en ce qu'**il comprend en outre au moins un deuxième commutateur (S2), ledit deuxième commutateur (S2) ayant au moins une borne de travail (A2), une borne de référence (B2) et une borne d'entrée de commande (St2), la borne de travail (A2) du deuxième commutateur (S2) étant couplée à la borne de travail (A1) du premier commutateur (S1) en formant un circuit en pont, un point milieu du circuit en pont étant défini par le couplage de la borne de travail (A1) du premier commutateur (S1) et de la borne de travail (A2) du deuxième commutateur (S2).

5. Ballast électronique selon la revendication 1,
**caractérisé en ce que** le point de connexion entre l'inductance (L2) et la première diode (D1) est couplé au potentiel de référence via une troisième diode (D3).
